# EUROPÄISCHE PATENTSCHRIFT

(11) **EP 1 621 332 B1**
(45) Veröffentlichungstag und Bekanntmachung des Hinweises auf die Patenterteilung: **31.07.2013**
(21) Anmeldenummer: 05012812.3
(22) Anmeldetag: 15.06.2005
(51) Int. Cl.: B32B 15/08, E04B 1/74, B27D 1/00

(54) **Schichtstoff, Bauteil mit einem Schichtstoff sowie Verfahren zu dessen Herstellung**
Laminate, building material with a laminate and manufacturing method thereof
Matériau multicouche, matériau de construction avec matériau multicouche et procédé de sa production

(30) Priorität: 30.07.2004 DE 102004037398
(43) Veröffentlichungstag der Anmeldung: 01.02.2006
(73) Patentinhaber: Fritz Egger GmbH & Co. OG, 3105 Unterradlberg (AT)
(72) Erfinder: Wittberg, Henning, 38162 Cremlingen (DE); Steinwender, Martin, 2380 Perchtoldsdorf (AT)
(74) Vertreter: Cohausz & Florack

(56) Entgegenhaltungen:
- EP-A- 0 960 725
- DE-A1- 1 949 595
- DE-U1- 29 806 848
- GB-A- 2 306 389

## Beschreibung

Die Erfindung betrifft Verwendungen eines zum Aufbringen auf eine Trägerplatte, vorzugsweise eine Holzwerkstoffplatte, dienenden Schichtstoffes mit einer Schichtstoffaußenseite mit einer mit der Platte verbindbaren Schichtstoffinnenseite, und mit einer Metallfolienschicht mit mindestens einer Metallfolie, wobei auf einer ersten Seite der Metallfolienschicht mindestens eine Harzschicht angeordnet ist.

Im folgenden ist mit Schichtstoffaußenseite bzw. Außenseite eines Bauteils die Seite gemeint, die beim fertigen Bauteil seine Oberfläche bildet, wohingegen mit Schichtstoffinnenseite beim fertigen Bauteil die mit der Trägerplatte verbundene Seite des Schichtstoffes gemeint ist.

Ein Bauteil weist im erfindungsgemäßen Sinne beispielsweise eine oder mehrere miteinander verklebte, aus verpressten Holzpartikeln bestehende Einzelplatten auf sowie einen zumindest auf einer Seite des Aufbaus aus Einzelplatten aufgebrachten Schichtstoff, auch Laminat genannt, der aus einer oder mehreren Schichten, insbesondere Harzschichten, besteht.

Unter bestimmten Klimabedingungen, insbesondere dann, wenn auf der einen Seite des Bauteils eine höhere Luftfeuchtigkeit herrscht als auf der anderen Seite, kann es zu unerwünschten Verformungen des Bauteils kommen. Dies ist dadurch bedingt, dass die verschiedenen miteinander verklebten Holzplatten unterschiedlich viel Feuchtigkeit aufnehmen und unterschiedlich stark quellen. Dabei dehnen sich die zum feuchten Raumklima hin gerichteten Platten stärker aus als die auf der gegenüberliegenden Seite liegenden Platten des Bauteils. Es kommt zu einem Effekt, der mit dem Bimetall-Effekt vergleichbar ist. Auch Temperaturunteschiede haben Einfluss auf die unerwünschten Verformungen. Die unerwünschten Verformungen treten also vor allem bei Türen, insbesondere Wohnungseingangstüren, auf, die Zonen unterschiedlicher Klimate voneinander trennen.

Um den beschriebenen, Bimetall-ähnlichen Effekt, der die Gebrauchstauglichkeit des Bauteils beeinträchtigen kann und auch zu Schäden im umliegenden Bauwerk führen kann, etwas zu verringern, ist es aus dem Stand der Technik bekannt, eine separate Aluminiumfolie in den Aufbau aus Einzelplatten einzufügen. Ein typischer Aufbau für ein solches mit einer Aluminiumfolie versehenes Bauteil ist der folgende: Den Kern des Bauteils bildet eine Trägerplatte, beispielsweise eine Spanplatte, die mit zwei Hartfaserplatten, zwischen denen eine separate Aluminiumfolie eingefügt worden ist, verklebt ist. Auf den äußeren Hartfaserplatten ist schließlich ein Schichtstoff, beispielsweise ein Laminat mit melaminharzgetränktem Papier, aufgebracht.

Ein solcher Aufbau eines Bauteils mit einer Aluminiumfolie ist sehr aufwendig. Zunächst muss eine Aluminiumfolie auf einer Hartfaserplatte aufgebracht werden. Anschließend muss eine weitere Hartfaserplatte derart aufgeklebt werden, dass die Aluminiumfolie zwischen den beiden Hartfaserplatten angeordnet ist. Die Anordnung aus Hartfaserplatten und Aluminiumfolie muss schließlich auf die Trägerplatte aufgebracht werden. In einem letzten Schritt wird dann der Schichtstoff auf die äußere Hartfaserplatte aufgebracht. Trotz dieses aufwendigen Aufbaus des Bauteils ist nach wie vor ein, wenn auch verringerter, Bimetall-ähnlicher Effekt zwischen der äußeren Hartfaserplatte und den inneren Platten vorhanden.

Die DE 298 06 848 U1 offenbart einen Schichtstoff, der zum Aufbringen auf eine Trägerplatte geeignet ist, mit einer Schichtstoffaußenseite und einer mit der Platte verbindbaren Schichtstoffinnenseite. Der Schichtstoff enthält auch eine Metallfolie, wobei auf einer Seite der Metallfolie eine Harzschicht angeordnet ist. Ein Schichtstoff dieser Art ist auch aus der GB 2 306 389 A sowie der EP 0 960 725 A2 bekannt.

Ein wie zuvor beschriebener Schichtstoff wird nach seiner Herstellung, während der auch die Metallfolie bzw. Metallfolienschicht eingearbeitet wurde, auf eine separate Trägerplatte aufgebracht. Die fertigen Bauteile bestehend aus Trägerplatte und mit einer Metallfolie versehenem Schichtstoff werden beispielsweise als Fußbodenpaneele verwendet.

Bauteile für den Hausbau, beispielsweise für den Aufbau von Wänden, Decken, Türen, Böden etc., sind, wenn sie einen Schichtstoff der zuvor beschriebenen Art aufweisen, relativ aufwendig herzustellen und damit relativ teuer in der Anschaffung.

Es ist daher die Aufgabe der vorliegenden Erfindung, einen Schichtstoff zum Aufbringen auf eine Trägerplatte mit einer integrierten Metallfolienschicht zu schaffen,der eine wirtschaftlichere Herstellung von Bauteilen, die im Hausbau eingesetzt werden, ermöglicht.

Die zuvor hergeleitete und aufgezeigte Aufgabe wird gemäß einer ersten Lehre der vorliegenden Erfindung gelöst durch die Verwendung eines zum Aufbringen auf eine Trägerplatte, vorzugsweise eine Holzwerkstoffplatte, dienenden Schichtstoffes mit einer Schichtstoffaußenseite, mit einer mit der Platte verbindbaren Schichtstoffinnenseite, und mit einer Metallfolienschicht mit mindestens einer Metallfolie, wobei auf einer ersten Seite der Metallfolienschicht mindestens eine Harzschicht angeordnet ist, als Dampfsperre in einer Wand, in einer Decke, in einer Tür oder in einem Boden, insbesondere in einem Fußbodenpaneel.

Die Aufgabe wird ferner gemäß einer zweiten Lehre der vorliegenden Erfindung gelöst durch die Verwendung eines zum Aufbringen auf eine Trägerplatte, vorzugsweise eine Holzwerkstoffplatte, dienenden Schichtstoffes mit einer Schichtstoffaußenseite, mit einer mit der Platte verbindbaren Schichtstoffinnenseite, und mit einer Metallfolienschicht mit mindestens einer Metallfolie, wobei auf einer ersten Seite der Metallfolienschicht mindestens eine Harzschicht angeordnet ist, als Heizung, insbesondere Fußbodenheizung.

Gemäß einer dritten Lehre der vorliegenden Erfindung wird die Aufgabe gelöst durch die Verwendung eines zum Aufbringen auf eine Trägerplatte, vorzugsweise eine Holzwerkstoffplatte, dienenden Schichtstoffes mit einer Schichtstoffaußenseite, mit einer mit der Platte verbindbaren Schichtstoffinnenseite, und mit einer Metallfolienschicht mit mindestens einer Metallfolie, wobei auf einer ersten Seite der-Metallfolienschicht mindestens eine Harzschicht angeordnet ist, als Mittel zum Ableiten von elektrostatischen Aufladungen eines Nutzers, eines Bodens oder eines Möbels.

Die Aufgabe wird darüber hinaus gemäß einer vierten Lehre der vorliegenden Erfindung gelöst durch die Verwendung eines zum Aufbringen auf eine Trägerplatte, vorzugsweise eine Holzwerkstoffplatte, dienenden Schichtstoffes mit einer Schichtstoffaußenseite, mit einer mit der Platte verbindbaren Schichtstoffinnenseite, und mit einer Metallfolienschicht mit mindestens einer Metallfolie, wobei auf einer ersten Seite der Metallfolienschicht mindestens eine Harzschicht angeordnet ist, als Mittel zum Strahlenschutz.

Schließlich wird die Aufgabe gemäß einer fünften Lehre der vorliegenden Erfindung gelöst durch die Verwendung eines zum Aufbringen auf eine Trägerplatte, vorzugsweise eine Holzwerkstoffplatte, dienenden Schichtstoffes mit einer Schichtstoffaußenseite, mit einer mit der Platte verbindbaren Schichtstoffinnenseite, und mit einer Metallfolienschicht mit mindestens einer Metallfolie, wobei auf einer ersten Seite der Metallfolienschicht mindestens eine Harzschicht angeordnet ist, als Mittel zum Brandschutz.

Es sei hervorgehoben, dass der verwendete Schichtstoff auf jegliche Form von Trägerplatten aufgebracht werden kann, wobei das Material der Trägerplatte beliebig ist. Auch kann eine Trägerplatte im Sinne der Erfindung auch aus mehreren Einzelplatten oder -schichten des gleichen oder eines unterschiedlichen Materials bestehen. Bevorzugt wird aber die Verwendung des Schichtstoffes in Verbindung mit einer Holzwerkstoffplatte.

Mit einer Holzwerkstoffplatte im Sinne der Erfindung ist jegliche Form von Partikel- oder Faserplatten wie zum Beispiel mitteldichte Faserplatten (MDF), hochdichte Faserplatten (HDF) oder Faserplatten von sehr geringer Dichte (LDF) gemeint. Auch Spanplatten oder OSB-Platten (Oriented-Strands-Board) fallen unter den Begriff Holzwerkstoffplatte. Es ist auch denkbar, eine Holzwerkstoffplatte aus mehreren, miteinander verklebten Einzelplatten vorzusehen.

Selbstverständlich können auch andere Materialien wie Dämmstoffe in der Trägerplatte und/oder dem Bauteil vorgesehen sein.

Ein zum Aufbringen auf eine Trägerplatte, vorzugsweise eine Holzwerkstoffplatte, dienender Schichtstoff mit einer Schichtstoffaußenseite, mit einer mit der Platte verbindbaren Schichtstoffinnenseite und mit einer Metallfolienschicht mit mindestens einer Metallfolie, wobei auf einer ersten Seite der Metallfolienschicht mindestens eine Harzschicht angeordnet ist, bietet aufgrund der darin angeordneten Metallfolienschicht eine Vielzahl spezieller Anwendungsmöglichkeiten. Unabhängig davon, dass der Schichtstoff aufgrund seines Aufbaus und der darin an der speziellen Stelle angeordneten Metallfolienschicht die Herstellung von Bauteilen, die im Hausbau eingesetzt werden können, ermöglicht und dabei einen Bimetall-ähnlichen Effekt aufgrund des speziellen Aufbaus optimal verhindert, ist ein weiterer Vorteil der erfindungsgemäßen Verwendungen, dass der Schichtstoff zusätzliche im Hausbau notwendige Funktionen bereitstellt, nämlich eine Dampfsperre, eine Heizung, eine Möglichkeit zum Ableiten von elektrostatischen Aufladungen, eine Möglichkeit zum Strahlenschutz oder eine Möglichkeit zum Brandschutz. Mit anderen Worten wird durch die erfindungsgemäßen Verwendungen des genannten Schichtstoffes dieser optimal dadurch genutzt, dass die integrierte Metallfolienschicht eine Doppelfunktion hat. Einerseits werden Bauteile ohne den Nachteil eines Bimetall-ähnlichen Effekts ermöglicht, andererseits werden auch Zusatzfunktionen, die ansonsten von separaten Einrichtungen bereitzustellen wären, wie Dampfsperre, Heizung etc., automatisch mitgeliefert. Dadurch werden die relativ hohen Kosten für einen Schichtstoff der zuvor beschriebenen Art mehr als kompensiert.

Der Schichtstoff, der die äußere Schicht von Böden, beispielsweise Fußbodenpaneelen, Wänden, Decken oder Türen bilden kann, ist besonders geeignet als Dampfsperre. Die Dampfsperre verhindert nicht nur eine Bimetall-ähnliche Verformung der Trägerplatte bzw. Trägerplatten, sondern ist auch hilfreich bei der Erzeugung und Aufrechterhaltung eines bestimmten Raumklimas, da die Metallfolie bzw. Metallfolienschicht einen Feuchtigkeitsaustausch zwischen dem Inneren des Raumes und der äußeren Umgebung verhindern kann.

Es ist auch denkbar, eine Metallfolie in dem Schichtstoff mit thermischer Energie zu beaufschlagen, das heißt zu beheizen oder zu kühlen. Insbesondere bei Verwendung des Schichtstoffs als Bestandteil von Böden kann auf diese Weise mit einfachen Mitteln eine Heizung, zum Beispiel eine Fußbodenheizung, hergestellt werden. Der Vorteil ist, dass das heizende Medium, nämlich die Metallfolie, erfindungsgemäß auf der Oberseite der Böden angeordnet werden kann und nicht, wie dies bei herkömmlichen Fußbodenheizungen der Fall ist, unter den Böden, was Energiekosten spart und ein schnelles Ansprechverhalten des Heizsystems mit sich bringt.

Weiterhin ist denkbar, die Metallfolie bzw. Metallfolienschicht alternativ oder zusätzlich zu thermischer Energie mit elektrischer Energie zu beaufschlagen oder elektrische Energie davon abzuleiten. Besonders letzteres ist eine bevorzugte Anwendung für Computerarbeitsräume, da in solchen Räumen elektrostatische Aufladungen unbedingt vermieden werden müssen. Eine elektrostatische Aufladung des Nutzers oder des Bodens oder von Möbeln in solchen speziellen Räumen kann über die Metallfolie bzw. Metallfolienschicht einfach abgeleitet werden.

Der Werkstoff Metall als Bestandteil des Schichtstoffs bietet aber auch noch die Möglichkeit, auf einfache Weise einen Strahlenschutz oder Brandschutz herzustellen.

Vorzugsweise weist die Metallfolie bei dem verwendeten Schichtstoff eines oder mehrere der Metalle Aluminium, Messing, Kupfer, Bronze, Silber oder Gold oder Legierungen davon auf. Selbstverständlich sind abhängig von der Zweckbestimmung auch andere Metalle denkbar, im Rahmen eines Strahlenschutzes beispielsweise das Metall Blei.

Vorteilhafterweise ist bei dem verwendeten Schichtstoff mindestens eine weitere Harzschicht auf einer zweiten, der ersten Seite gegenüberliegenden Seite der Metallfolienschicht angeordnet. Auf diese Weise läßt sich der Schichtstoff leichter auf die Trägerplatte aufbringen.

Gemäß einer vorteilhaften Ausgestaltung des verwendeten Schichtstoffs weist die Metallfolienschicht mehrere Metallfolien auf. Auf diese Weise können verschiedene Metallfolien, die mit einem Primer versehen sein können, miteinander zu einer Metallfolienschicht verbunden werden. Vorteilhafterweise ist jeweils zwischen zwei benachbarten Metallfolien mindestens eine Harzschicht vorgesehen. Dadurch kann beispielsweise eine Metallfolie eine Beaufschlagung mit thermischer Energie erfahren, wohingegen eine andere Metallfolie mit elektrischer Energie beaufschlagt wird oder wobei von der anderen Metallfolie elektrische Energie abgeleitet wird. Besonders vorteilhaft ist dies in Computerarbeitsräumen, in denen auf diese Weise gleichzeitig elektrostatische Aufladungen vermieden werden können und eine Klimatisierung durch Heizen oder Kühlen erfolgen kann.

Auf die Harzschicht, die auf der ersten Seite der Metallfolienschicht angeordnet ist, kann noch eine weitere Schicht aufgebracht sein, auf die zum Schutz noch eine Overlayschicht aufgebracht sein kann. Diese Schicht, aber auch die übrigen Harzschichten des Schichtstoffs, sind vorzugsweise Schichten mit einem Duroplastharz, Aminoplastharz oder Harz auf Phenol- oder Melaminbasis. Das Harz kann auch Korund enthalten. Es ist denkbar, dass die Schichten durch ein harzgetränktes Papier gebildet sind oder zumindest ein solches Papier aufweisen. So ist beispielsweise ein Schichtstoff denkbar, der von innen nach außen folgendermaßen aufgebaut ist: zunächst folgt eine Phenolharzschicht, die zur Verbindung mit der Trägerplatte dient; auf der Phenolharzschicht ist eine Metallfolie, beispielsweise eine Aluminiumfolie, aufgebracht; auf der Metallfolie ist eine weitere Phenolharzschicht aufgebracht; nach außen hin wird der Schichtstoff von einer Melaminharzschicht, die als Dekorschicht dient, abgeschlossen.

Um insbesondere bei Böden rutschhemmende Oberflächen zu schaffen, kann der verwendete Schichtstoff auch so ausgebildet sein, dass die Harzschicht teilweise Durchbrechungen aufweist. Auch ist es denkbar, dass auf die Harzschicht eine weitere Schicht aufgebracht ist, wobei dann die weitere Schicht teilweise Durchbrechungen aufweist.

Vorteilhaft ist es schließlich, insbesondere in Verbindung mit den zuvor beschriebenen Durchbrechungen, wenn die Metallfolie eine dreidimensionale Struktur und/oder Prägung aufweist. Beispielsweise kann eine solche Struktur wellenförmig oder geriffelt ausgebildet sein. Es ist auch denkbar, dass die Metallfolie oberflächenbehandelt, insbesondere eloxiert, beschichtet oder bedruckt ist.

Die Herstellung eines Schichtstoffs, wie er zuvor beschrieben wurde, kann durch ein getaktetes Verfahren, beispielsweise mittels eines Stempels, oder durch ein kontinuierliches Verfahren, beispielsweise mittels Walzen und/oder Bändern, erfolgen.

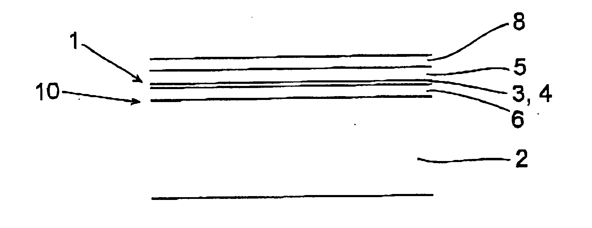

Es gibt nun eine Vielzahl von Möglichkeiten, den verwendeten Schichtstoff auszugestalten und weiterzubilden. Hierzu wird beispielsweise verwiesen einerseits auf die dem Patentanspruch 1 nachgeordneten Patentansprüche, andererseits auf die Beschreibung eines Ausführungsbeispiels in Verbindung mit der Zeichnung sowie einige Beispiele eines möglichen Aufbaus des verwendeten Schichtstoffs.

In der Zeichnung zeigt die einzige Figur schematisch den Schichtaufbau eines Ausführungsbeispiels eines Schichtstoffs, der als Dampfsperre, Heizung, Mittel zum Ableiten von elektrostatischen Aufladungen, Mittel zum Strahlenschutz oder Mittel zum Brandschutz verwendet werden kann.

In der einzigen Figur ist ein Bauteil mit einem Schichtstoff 1 dargestellt, wobei der Schichtstoff 1 eine Metallfolienschicht 3 mit einer Metallfolie 4, beispielsweise einer Aluminiumfolie, aufweist. Zur Schichtstoffaußenseite hin ist auf der Metallfolienschicht 3 eine Harzschicht 5 angeordnet, die beispielsweise aus einem mit Phenolharz getränkten Papier, einem sogenannten Kraftpapier, besteht. Wiederum auf der Harzschicht 5 ist eine weitere Schicht 8, beispielsweise ein mit Melaminharz getränktes Papier, zu Dekorzwecken aufgebracht.

Auch zur Schichtstoffinnenseite hin ist die Metallfolienschicht 3 bzw. die Metallfolie 4 mit einer Harzschicht 6, beispielsweise einem ebenfalls mit Phenolharz getränkten Papier, versehen. Diese Harzschicht 6 dient zum Verbinden des Schichtstoffs mit einer Trägerplatte 2, beispielsweise einer OSB-Platte.

Zur Gewährleistung einer optimalen Verbindung zwischen Metallfolienschicht 3 und den Harzschichten 5 und 6 ist die Metallfolienschicht auf ihrer zur Schichtstoffaußenseite hin gerichteten Seite und auf der gegenüberliegenden, zur Schichtstoffinnenseite hin gerichteten Seite jeweils mit einem Primer (nicht dargestellt) versehen.

Aufgrund des relativ einfachen Aufbaus eines Schichtstoffs, wie er anhand der einzigen Figur beschrieben wurde, kann auf besonders einfache und wirkungsvolle Weise eine Dampfsperre in einer Wand, in einer Decke, in einer Tür oder in einem Boden, insbesondere in einem Fußbodenpaneel, geschaffen werden. Auch eine Heizung sowie ein Mittel zum Ableiten von elektrostatischen Aufladungen eines Nutzers, eines Bodens oder eines Möbels, ein Mittel zum Strahlenschutz oder ein Mittel zum Brandschutz kann ebenfalls durch einen wie zuvor beschriebenen Schichtstoff besonders einfach realisiert werden.

Im folgenden werden noch einige Beispiele für den Aufbau eines für die vorangehenden Anwendungsfälle optimierten Schichtstoffs beschrieben. Ferner werden in den Beispielen verschiedene Verfahren und verschiedene Verfahrensparameter für die Herstellung eines solchen Schichtaufbaus beschrieben.

### Beispiel 1:

Bei einer Temperatur von 195°C und einem Vortrieb der Presswalzen, durch die die Einzelschichten zu einem Schichtstoff verbunden werden, von 11 m/min. wird ein Schichtstoff hergestellt, der auf seiner Oberseite eine Dekorschicht aus Melaminharz ohne Korund aufweist, darunter eine Aluminiumfolie mit einer Dicke von 60 µm und wiederum darunter ein phenolimprägniertes Kraftpapier von 80 g/m². Nach dem Pressen wird die Unterseite, also das phenolimprägnierte Kraftpapier, geschliffen. Unmittelbar nach der Produktion rollt sich der Schichtstoff noch etwas auf. Nach einem Tag ist zwischen der Auflagefläche und der Dekorschicht, das heißt der Melaminharzschicht, nur noch ein Abstand von 5 cm zu verzeichnen.

### Beispiel 2:

Bei einer Temperatur von 195°C und einem Vortrieb der Presswalzen von 11 m/min. wird ein Schichtstoff hergestellt, der auf seiner Oberseite eine Dekorschicht aus Melaminharz mit Korund aufweist, darunter eine Aluminiumfolie mit einer Dicke von 60 µm und wiederum darunter ein phenolimprägniertes Kraftpapier von 80 g/m². Nach dem Pressen wird die Unterseite, also das phenolimprägnierte Kraftpapier, geschliffen. Unmittelbar nach der Produktion rollt sich der Schichtstoff noch etwas auf. Nach einem Tag ist zwischen der Auflagefläche und der Dekorschicht, das heißt der Melaminharzschicht, nur noch ein Abstand von 5 cm zu verzeichnen.

### Beispiel 3:

Bei einer Temperatur von 195°C und einem Vortrieb der Presswalzen von 11m/min. wird ein Schichtstoff hergestellt, der auf seiner Oberseite eine Dekorschicht aus Melaminharz ohne Korund aufweist, darunter ein phenolimprägniertes Kraftpapier von 150g/m², darunter eine Aluminiumfolie mit einer Dicke von 60 µm, darunter wieder ein phenolimprägniertes Kraftpapier von 150 g/m² und schließlich ein phenolimprägniertes Pergamentpapier von 50 g/m². Nach dem Pressen wird die Unterseite geschliffen. Unmittelbar nach der Produktion ist zwischen der Auflagefläche und der Vorschicht nur noch ein Abstand von 7 cm zu verzeichnen. Nach einem Tag liegt der Schichtstoff plan auf. Zur Vermeidung von Blasen, die bei einer Herstellung von 125°C und einem Vortrieb von 11 m/min. entstehen können, kann die Herstellung auch bei 180°C und einem Vortrieb von 10 m/min. erfolgen.

### Beispiel 4:

Bei einer Temperatur von 195°C und einem Vortrieb der Presswalzen von 11m/min. wird ein Schichtstoff hergestellt, der auf seiner Oberseite eine Dekorschicht aus Melaminharz mit Korund aufweist, darunter ein phenolimprägniertes Kraftpapier von 150g/m², darunter eine Aluminiumfolie mit einer Dicke von 60 µm, darunter wieder ein phenolimprägniertes Kraftpapier von 150 g/m² und schließlich ein phenolimprägniertes Pergamentpapier von 50 g/m². Nach dem Pressen wird die Unterseite geschliffen. Unmittelbar nach der Produktion ist zwischen der Auflagefläche und der Vorschicht nur noch ein Abstand von 7 cm zu verzeichnen. Nach einem Tag liegt der Schichtstoff plan auf. Zur Vermeidung von Blasen, die bei einer Herstellung von 125°C und einem Vortrieb von 11 m/min. entstehen können, kann die Herstellung auch bei 180°C und einem Vortrieb von 10 m/min. erfolgen.

## Patentansprüche

1. Verwendung eines zum Aufbringen auf eine Trägerplatte (2), vorzugsweise eine Holzwerkstoffplatte, dienenden Schichtstoffs (1)
- mit einer Schlichtstoffaußenseite,
- mit einer mit der Platte (2) verbindbaren Schichtstoffinnenseite, und
- mit einer Metallfolienschicht (3) mit mindestens einer Metallfolie (4) wobei auf einer ersten Seite der Metallfolienschicht (3) mindestens eine Harzschicht (5) angeordnet ist.
als Dampfsperre in einer Wand, in einer Decke, in einer Tür oder in einem Boden, insbesondere in einem Fußbodenpaneel.

2. Verwendung eines zum Aufbringen auf eine Trägerplatte (2), vorzugsweise eine Holzwerkstoffplatte, dienenden Schichtstoffes (1)
- mit einer Schichtstoffaußenseite,
- mit einer mit der Platte (2) verbindbaren Schichtstoffinnenseite, und
- mit einer Metallfolienschicht (3) mit mindeste einer Metallfolie (4), wobei auf einer ersten Seite der Metallfolienschicht (3) mindestens eine Harzschicht (5) angeordnet ist,
als Heizung, insbesondere Fußbodenheizung.

3. Verwendung eines zum Aufbringen auf eine Trägerplatte (2), vorzugsweise eine Holzwerkstoffplatte, dienenden Schichtstoffes (1)
- mit einer Schichtstoffaußenseite,
- mit einer mit der Platte (2) verbindbaren Schichtstoffinnenseite, und
- mit einer Metallfolienschicht (3) mit mindestens einer Metallfolie (4), wobei auf einer ersten Seite der Metallfolienschicht (3) mindestens eine Harzschicht (5) angeordnet ist,
als Mittel zum Ableiten von elektrostatischen Aufladungen eines Nutzers, eines Bodens oder eines Möbels.

4. Verwendung eines zum Aufbringen auf eine Trägerplatte (2), vorzugsweise eine Holzwerkstoffplatte, dienenden Schichtotoffes (1)
- mit einer Schichtstoffaußenseite,
- mit einer mit der Platte (2) verbindbaren Schichtstoffinnonseite, und
- mit einer Metällfolienschicht (3) mit mindestens einer Metallfolie (4), wobei auf einer ersten Seite der Metallfolienschicht (3) mindestens eine Harzschicht (5) angeordnet ist,
als Mittel zum Strahlenschutz.

## Claims

1. Usage of a laminate (1), which is used for application to a supporting board (2), preferably a wood based material board,
- having a laminate outer side,
- having a laminate inner side which can be connected to the board (2), and
- having a metal foil layer (3) with at least one metal foil (4), wherein at least one resin layer (5) is arranged on a first side of the metal foil layer (3),
as a vapour barrier in a wall, in a ceiling, in a door or in a floor, in particular in a flooring panel.

2. Usage of a laminate (1), which is used for application to a supporting board (2), preferably a wood based material board,
- having a laminate outer side,
- having a laminate inner side which can be connected to the board (2), and
- having a metal foil layer (3) with at least one metal foil (4), wherein at least one resin layer (5) is arranged on a first side of the metal foil layer (3),
as a heating system, in particular a floor heating system.

3. Usage of a laminate (1), which is used for application to a supporting board (2), preferably a wood based material board,
- having a laminate outer side,
- having a laminate inner side which can be connected to the board (2), and
- having a metal foil layer (3) with at least one metal foil (4), wherein at least one resin layer (5) is arranged on a first side of the metal foil layer (3),
as a means for discharging electrostatic charges of a user, of a floor or of an item of furniture.

4. Usage of a laminate (1), which is used for application to a supporting board (2), preferably a wood based material board,
- having a laminate outer side,
- having a laminate inner side which can be connected to the board (2), and
- having a metal foil layer (3) with at least one metal foil (4), wherein at least one resin layer (5) is arranged on a first side of the metal foil layer (3),
as a means for radiation protection.

## Revendications

1. Utilisation d'un laminé (1) destiné à être appliqué sur une plaque de support (2), de préférence un produit dérivé du bois en forme de plaque,
- avec un côté extérieur de laminé,
- avec un côté intérieur de laminé reliable à la plaque (2), et
- avec une couche en feuille métallique (3) avec au moins une feuille métallique (4), dans laquelle au moins une couche de résine (5) est disposée sur un premier côté de la couche en feuille métallique (3),
en tant que barrière à vapeur dans un mur, dans un plafond, dans une porte ou dans un plancher, en particulier dans un panneau de revêtement de sol.

2. Utilisation d'un laminé (1) destiné à être appliqué sur une plaque de support (2), de préférence un produit dérivé du bois en forme de plaque,
- avec un côté extérieur de laminé,
- avec un côté intérieur de laminé reliable à la plaque (2), et
- avec une couche en feuille métallique (3) avec au moins une feuille métallique (4), dans laquelle au moins une couche de résine (5) est disposée sur un premier côté de la couche en feuille métallique (3),
en tant que chauffage, en particulier chauffage au sol.

3. Utilisation d'un laminé (1) destiné à être appliqué sur une plaque de support (2), de préférence un produit dérivé du bois en forme de plaque,
- avec un côté extérieur de laminé,
- avec un côté intérieur de laminé reliable à la plaque (2), et
- avec une couche en feuille métallique (3) avec au moins une feuille métallique (4), dans laquelle au moins une couche de résine (5) est disposée sur un premier côté de la couche en feuille métallique (3),
en tant que moyen de blindage contre les charges électrostatiques d'un utilisateur, d'un plancher ou d'un meuble.

4. Utilisation d'un laminé (1) destiné à être appliqué sur une plaque de support (2), de préférence un produit dérivé du bois en forme de plaque,
- avec un côté extérieur de laminé,
- avec un côté intérieur de laminé reliable à la plaque (2), et
- avec une couche en feuille métallique (3) avec au moins une feuille métallique (4), dans laquelle au moins une couche de résine (5) est disposée sur un premier côté de la couche en feuille métallique (3),
en tant que moyen de protection contre le rayonnement.
